(19) **Europäisches Patentamt / European Patent Office / Office européen des brevets**

(11) **EP 4 617 913 A1**

(12) **EUROPEAN PATENT APPLICATION**

(43) Date of publication:
17.09.2025 Bulletin 2025/38

(51) International Patent Classification (IPC):
G06F 16/906 (2019.01)          G06N 3/0464 (2023.01)
G06N 3/047 (2023.01)           G06N 3/048 (2023.01)
G06N 3/063 (2023.01)           G06N 3/088 (2023.01)
G06N 3/09 (2023.01)

(21) Application number: 24163833.7

(22) Date of filing: 15.03.2024

(52) Cooperative Patent Classification (CPC):
G06N 3/047; G06F 16/906; G06N 3/0464;
G06N 3/048; G06N 3/063; G06N 3/09;
G06N 3/0455; G06N 3/088

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Airbus S.A.S.
31700 Blagnac (FR)

(72) Inventor: Schertier, Klaus
82024 Taufkirchen (DE)

(74) Representative: OTN Airbus SAS
Airbus Defence and Space GmbH
Willy-Messerschmitt-Straße 1
82024 Taufkirchen (DE)

(54) **METHOD FOR COMPUTING AT LEAST ONE OUTPUT VALUE FOR A NUMBER OF INPUT VALUES BY A COMPUTING DEVICE, AS WELL AS CORRESPONDING COMPUTING DEVICE, COMPUTER PROGRAM, COMPUTER-READABLE DATA CARRIER, AND APPARATUS**

(57)     A method for computing at least one output value (B) from a number of input values (A) by a computing device (2), in particular for performing computer-assisted data classification and/or data regression based on real-time processing of sensor data (I), a corresponding computer program (3), computer-readable data-carrier (4), computing device (2) and apparatus (1), such as a vehicle, in particular an aircraft, are described, the method comprising the steps of providing an input number (D) representing a vector size of an input vector (x) containing the input values (A); defining a projection number (N) of projections as a multiple of the input number (D) based on a respective multiplying number (O); precomputing a transformed projection tensor (W_FD) as a transformation of a projection tensor (W) having a projection size of the input number (D) multiplied by the multiplying number (O) and containing weight values (w) in the frequency domain; obtaining a transformed embedded input tensor (X_FD) by computing a transformed input vector (x_FD) as a transformation of the input vector (x) into the frequency domain; embedding the transformed input vector (x_FD) into the transformed embedded input vector (X_FD); and using the transformed projection tensor (W_FD) and the transformed embedded input vector (X_FD) for computing the at least one output value (B).

Fig. 1

**Description**

Technical Field

The present disclosure relates computer systems providing artificial intelligence (AI) and Machine Learning (ML) training and/or interference for controlling apparatuses, such as vehicles, e.g., aircraft or alike. In particular, the disclosure relates to a method for computing at least one output value from a number of input values by a computing device, in particular for performing computer-assisted data classification and/or data regression based on real-time processing of sensor data, to a computer program, to a computer-readable data-carrier, to a computing device, and to an apparatus, such as a vehicle, in particular an aircraft.

Technical Background

Computer systems for controlling apparatuses are known from the prior art. Such computer systems commonly comprise computing devices, e.g., in the form of microcontrollers, digital signal processors (DSPs), field programmable gate arrays (FPGAs), application-specific integrated circuit (ASICs), and alike. The computing devices can be used for performing certain functions and/or processes of the computer systems and can constitute a core part of control systems for controlling and/or related to all kinds of technical installations, including fault intolerant and safety relevant apparatuses, such as vehicles, medical devices, utility provider infrastructure, and alike. Thus, respective computing devices have to be specifically reliable, fast, and efficient.

GB 2 620 403 A, for example, relates to a test apparatus for testing a trained classifier (e.g., neural network, random forest algorithm, naive Bayes classifier, support vector machine, linear regression machine learning algorithm, etc) that is configured to control at least part of an aircraft system is programmed to evaluate the performance of the trained classifier. Scenario data, comprising operating inputs representing an operational state of an aircraft and classifier outputs for controlling the aircraft system, is obtained. Model data representing the model of the aircraft system is obtained. Error categorisation data for each aircraft operating scenario is generated based on respective classifier outputs applied to the model. The error categorisation data may be generated by evaluating how the model would operate when controlled using the respective classifier outputs. The model may be a graph model comprising a set of nodes connected by corresponding directed edges, each node representing a function of a component in the at least part of an aircraft system.

US 2024/005207 A1 refers to a method for training at least one artificial intelligence model for estimating the weight of an aircraft during flight based on use data, the at least one artificial intelligence model being developed in order to be implemented during at least one predetermined flight phase of at least one aircraft of the same type. The method comprises carrying out a plurality of flights and, for at least one of the plurality of flights, the method comprises acquiring, during flight, at least one set of flight data, carrying out at least one consistency test in order to check that a reliable reference weight is calculated or capable of being calculated, calculating at least one calculated weight of the aircraft, and storing the at least one set of flight data and the at least one calculated weight.

US 2023/419477 A1 describes a system for inspecting structural elements during their manufacturing capable of detecting anomalies in the automatic placement of composite materials through computer vision, comprising an image capture module that can be integrated into an ATL machine extracting data from the images, from which an artificial vision module obtains information on the anomalies detected with computer vision, information that a humanmachine interface module automatically translates into a language understandable to humans. By avoiding the need to manually enter data for the inspection, human errors are avoided, and the information obtained for each inspection can be automatically saved for record storage. The system is designed to inspect large structural element compounds, such as aircraft wings.

EP 4 081 453 A1 describes an aircraft control system comprising an input interface, an output interface and a processing engine comprising a classifier. The classifier applies input data generated by the input interface to the classifier to generate output control data. The classifier has a plurality of parameters which represent a control policy for operating the aircraft. The output interface generates control outputs to control the aircraft based on the output control data. Also disclosed is a machine learning system for training the classifier. The machine learning system comprises an environment, a pathway evaluation engine, storage, and a training engine. The machine learning system generates training data by selecting a pathway representing an operating procedure using the pathway evaluation engine. The training engine trains the classifier using the training data.

AI/ML algorithms as known from the prior art can be executed on different processing devices such as CPUs, GPUs, or TPUs. Independent of the architectures of such devices, their processing units usually consist of systolic arrays for multiply operations followed by an adder tree structure to add up the results. Systolic arrays are able to solve matrix multiplications efficiently.

Nevertheless, for example, when processing convolutional neural networks, this creates a data overhead as the input parameters (feature maps, kernels) have to be transformed into matrices which are commonly much bigger than the actual data to be processed. As to multiplication operations followed by adder tree structures, they may be resource efficient as far as for every multiplication operation to be performed, only a fraction of an adder/accumulator can be used which are commonly resource intensive hardware components. Moreover, tree structures depend on kernel sizes of the respective convolution, e.g., for a 5x5 kernel, the input structure has 25 inputs. Thus, if a neural network has layers with different kernel sizes, which is the case for most architectures, this architecture cannot be used efficiently for smaller kernel sizes, such as 3x3.

Consequently, concepts and AI/ML model architectures, as known from the prior art, are commonly balancing different trade-offs between computational efficiency (required operations and memory) on the one hand, and model capacity (e.g., the capability to perform complex inference tasks), on the other hand. In this spectrum, the current state of the art, in particular for Deep Learning, is computationally rather demanding and is often associated with long training and inference times. As a consequence, training procedures often have to be performed using cloud computing which has the disadvantages that specialized hardware has to be used (e.g., GPUs which are not ubiquitous), and/or that it has a high-power consumption, leading to relatively high costs and environmental impacts.

To achieve fast inference, e.g., for real-time processing of sensor data, often specialized hardware accelerators (AI accelerators) are required, which further complicate respective computer systems as known from the prior art. For a large number of apparatuses, such as aircraft, or alike, such dedicated accelerators are not always available since, for example, they would have to be certified as on-board processing hardware which again may be cost and time consuming. In this respect, Deep Learning is a prominent example of a state-of-the-art AI/ML methodology with trade-offs between computational efficiency and model capacity, as Deep Learning has advantages with respect to achievable high model capacities which can be exploited by the application of AI accelerators, deep learning processors or neural processing units.

In view of the above, AI/ML concepts in general have to deal with trade-offs and many technological developments target at increasing the computational efficiency while minimizing negative impacts on the model capacity - or the other way around. Computing devices for controlling and/or related to apparatuses, as known from the prior art, may not fully satisfy certain requirements with regard to computing performance when providing or being combined with AI/ML algorithms, e.g., involving neural networks. Consequently, the usability of AI/ML in computing systems may be limited, especially for controlling fault intolerant and/or safety-critical apparatuses based on real-time processing of sensor data.

Summary

It may thus be seen as an object to enable computer systems for controlling and/or related to fault intolerant and/or safety relevant apparatuses to use AI/ML in a highly performant and efficient manner. Furthermore, it may be seen as an object to enhance or provide a way to enable computer systems to use AI/ML. These objects are solved by the subject matter of the independent claims.

According to an aspect, a method for computing at least one output value from a number of input values by a computing device is provided, in particular for performing computer-assisted data classification and/or data regression based on real-time processing of sensor data, the method comprising the steps of providing an input number representing a vector size of an input vector containing the input values; defining a projection number of projections as a multiple of the input number based on a respective multiplying number; precomputing a transformed projection tensor as a transformation of a projection tensor having a projection size of the input number multiplied by the multiplying number and containing weight values in the frequency domain; obtaining a transformed embedded input tensor by computing a transformed input vector as a transformation of the input vector into the frequency domain; embedding the transformed input vector into the transformed embedded input vector; and using the transformed projection tensor and the transformed embedded input vector for computing the at least one output value.

According to an aspect, a computer program is provided, comprising instructions which, when the program is executed by a computing device, cause the computing device to carry out a corresponding method.

According to an aspect, a computer-readable data-carrier is provided, having stored thereon the computer program.

According to an aspect, a computing device is provided, configured to carry out a corresponding computer program and/or comprising a corresponding computer-readable data-carrier.

According to an aspect, an apparatus, such as a vehicle, in particular an aircraft, is provided, comprising a corresponding computing device.

This solution is suitable in any kind of computing environment involving Artificial Intelligence (AI) and/or Machine Learning (ML), in particular for training and/or interference of respective algorithms, including Extreme Learning Machines (ELM), Reservoir Computing, Echo State Networks and other neural network applications. The data classification and/or regression can involve object classification and/or parameter assessment, or alike. The object may be any physical object of and/or from which sensor data is provided, for example, as camera images, radar images, sound files, physical measurement values, such as temperatures, angles, velocities, or alike.

Data classification and/or regression may be performed on the respective input, including, but not limited to evaluations, object definitions, time-series predictions, etc. Real-time processing of the input values is desirable. However, based on respective computational capacities and/or efficiency, the output values may be provided with a corresponding timing as possible, desired and/or required by a certain application. The vector size can correlate with a feature dimension of an input vector and/or a respective input tensor. The input vector may constitute a part of and/or can be derived from the input tensor. The projections can be random projections. The embedding of the transformed input vector may involve embedding the transformed input vector in a transformed padding matrix in the frequency domain, such that a matrix size of the transformed embedded input vector matches the projection size. The weight values can contain random values, in particular for ELM applications. For any transformations to and/or from the frequency domain, Fast Fourier Transformation (FFT) and/or inverse FFT, respectively, may be used.

The solution has the advantage over the prior art of enabling AI/ML training and interference in areas which could previously not benefit from such approaches due to model capacity and/or efficiency constraints. It provides a computationally efficient way to execute AI/ML especially for methodologies that make use of random projections, such as ELM. Compared to the prior art, the solution allows to reduce the number of operations needed to perform a specific task, in particular by allowing a reduction of the projections of any feature vector for relevant projection numbers and input numbers. This in turn allows for a reduction of memory space needed to store respective computational values, such as random values used for the random projections.

Thereby, trade-offs between the computational efficiency and the capacity of AI/ML models can be avoided, especially when using random projections. For example, the capacity of AI/ML models can be increased by allowing to increase the number of random projections N, and/or to increase input feature vector dimensions while improving computational efficiency compared to the prior art. AI/ML models can therefore be used in applications in which previously the computational efficiency and/or model capacity has been deemed insufficient.

The solution particularly provides computing devices which are suitable for all kinds of apparatuses, including fault intolerant and/or safety-critical systems. A corresponding apparatus may be provided in particular in form of a vehicle, such as a land vehicle, watercraft, aircraft and/or spacecraft, a medical device, such as a diagnostic tool or technical appliance, and/or any kind of utility provider infrastructure, such as power plants, energy network installations, as well as information infrastructure installations. A computer system for solving the underlying problem may thus comprise a corresponding computing device. The computer system thereby helps to accelerate AI/ML- training and/or interference.

The computing device may be part of a classification and/or regression arrangement for providing computer assisted classification and/or regression, respectively, in particular based on real-time processing of sensor data. The classification and/or regression arrangement can be configured to carry out a corresponding method, can comprise a corresponding computer program, a corresponding computer-readable data-carrier, and/or a corresponding computing device. The computer-readable data carrier may include and/or be comprised of a computer-readable medium and/or a data carrier signal.

Further developments can be derived from the dependent claims and from the following description. Features described with reference to the computing device may be implemented as method steps, or vice versa. Therefore, the description provided in the context of the computing device applies in an analogous manner also to respective methods. In particular, the functions of the computing device and of its components may be implemented as steps of methods and the method steps may be implemented as functions of the computing device, a computer system or vice versa.

According to an embodiment of a method, the step of obtaining the transformed embedded input vector involves repeating the transformed input vector and/or transformation of the input vector for matching a tensor size of the transformed embedded input tensor and the projection size at least in part. The transformed value matrix can be reproduced by means of the values stored in the transformed input vector and does not need to be computed explicitly. Thereby, computational efficiency and thus, model capacities may be further increased.

According to an embodiment of a method, the projection size is expressed by a row count and a column count of the projection tensor. The row count and the column count can be selected such that respective projection sizes can be efficiently transformed, for example, by FFT (e.g., power-of-two sizes). This allows for further increasing computational efficiency and model capacities.

The projection number can be a product of a number of T dimension values K ($K_1$ to $K_T$), which e.g., can be the number of rows and/or columns of the projection tensor, wherein $K_1$ should be at least equal or larger than the input number D. Hence, the projection number of random projections may be a product of numbers $K_1, ..., K_T$ in which $K_1$ is equal or larger than the input number. In other words, $K_1$ may be multiplied with a respective multiplying number O. The projection tensor may have a number of T dimensions based on the dimension values K to be processed, for example, the projection number is calculated as a product of the dimension values $K_1 \times K_2, ..., \times K_T$. The projection tensor may have a projection number of the input number D multiplied by the multiplying number O.

According to an embodiment of a method, the row count corresponds to the input number and/or the column count corresponds to the multiplying number. Thereby, computational efficiency can be particularly increased for cases where the projection number is higher than the input number, in that transformations on zero-padded versions of the input vector can be omitted. Thereby, computational efficiency and thus, model capacities may be further increased.

According to an embodiment of a method, the method further comprises the step of checking whether the input number of an input vector matches the row count. If the initial input number does not match the row count, e.g., when the initial input number is smaller than the row count, then the initial row count can be adapted to match a desired row count which again can be selected such that respective projection sizes can be efficiently transformed, for example, by FFT. This again allows for further increasing computational efficiency and model capacities.

According to an embodiment of a method, the method further comprises the step of obtaining the input vector by zero-padding the input vector for cases where the input number is smaller than the row count such that the length of the zero-padded input vector matches the row count. Zero-padding is an efficient way of adapting the initial row count to a desired row count. This helps in further increasing computational efficiency and model capacities.

According to an embodiment of a method, the method further comprises the step of performing a circular convolution of the transformed projection tensor and the transformed embedded input vector in the frequency domain. Circular convolutions can be performed by means of the transformed embedded input vector on any transformed projection tensor having any desired or required number of dimensions. This helps in enhancing adaptability of AI/ML models.

According to an embodiment of a method, the method further comprises the step of storing the transformed input vector, and/or the precomputed transformed projection tensor in a respective dedicated memory area. Thereby, the transformed input vector, and/or the precomputed transformed projection tensor can be held readily available for subsequent computing operations. This helps in further enhancing computational efficiency of AI/ML models.

According to an embodiment of a method, the method further comprises the step of obtaining the input vector and/or the input values from reading out sensor data from at least one sensor element and/or at least one data source. The at least one sensor element and/or the at least one data source may be part of and/or constitute a control element for a control device configured to control at least one function of an apparatus. The sensor data may be accessed as required or desired for performing a respective data classification and/or regression. If necessary, the input values can be buffered in the respective data source and/or retrieved from a data source, such as a storage device. This helps in enhancing applicability of AI/ML models.

According to an embodiment of a method, the at least one sensor element comprises or is part of a sensor array. The sensor array may be part of an image and/or radar sensor. Alternatively, or additionally, any other kind of data source may be used, including any kind of A/D converters, or alike, for providing parameters and/or signals to be processed. This helps in enhancing applicability of AI/ML models.

According to an embodiment of a method, the method further comprises the step of attributing the at least one output value to at least one of a number of different classes to be distinguished from each other. The different classes may be object classes, such as "person", "vessel", "bus", "aircraft", "water puddle", or "light reflection" which may be recognised such that the recognition is provided as a respective output value computed from input values based on sensor data from a sensor array, such as an image sensor, a radar sensor, or alike. The output values may be provided as an output vector containing probabilities for the number of respective classes to be distinguished from each other. Thereby, AI/ML models can be applied for classifying objects and images, which may be analysed in real-time. This helps in assisting human operators of respective apparatuses in decision-making and/or to implementing actions or responses based on the analyses.

For the case of computer-assisted data classification, a respective classification module can be implemented such that it involves a single layer feedforward ELM architecture with an activation function f, e.g., in the form of a rectified linear unit. The ELM model for classification can be expressed as $t(x) = Q * f(R*x)$, wherein Q is a matrix of weights connecting the random projections $R*x$ to an output $t(x)$. A number of different classes may be expressed by a respective length of a vector t which may be used for expressing both, classifications and/or regressions. In any case, the vector t would be an output. The matrix vector product $R*x$ or a product $W*x$ involving weights w can be replaced by a respective convolution in the frequency domain, e.g., by computing $ifft(W\_FD\ .*\ X\_FD)$, wherein an N element-wise complex multiplications with each requiring (in the standard form of a complex multiplication) 6 operations per element sum up to a multitude of a number N of operations to be carried out.

Brief Description of the Drawings

The subject matter will hereinafter be described in conjunction with the following drawing figures, wherein like numerals denote like elements, and wherein:

Fig. 1 is a schematic representation of an apparatus in the form of a vehicle, such as an aircraft, comprising a computing device configured to carry out a method for computing at least one output value from a number of input values.

Fig. 2 is a schematic representation of a one-dimensional circular convolution performed by the computing device shown in Fig. 1.

Fig. 3 is a schematic representation of a two-dimensional circular convolution performed by the computing device shown in Fig. 1.

Fig. 4 is a schematic representation of a three-dimensional circular convolution performed by the computing device shown in Fig. 1.

Fig. 5 is a schematic illustration of steps of a method.

Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

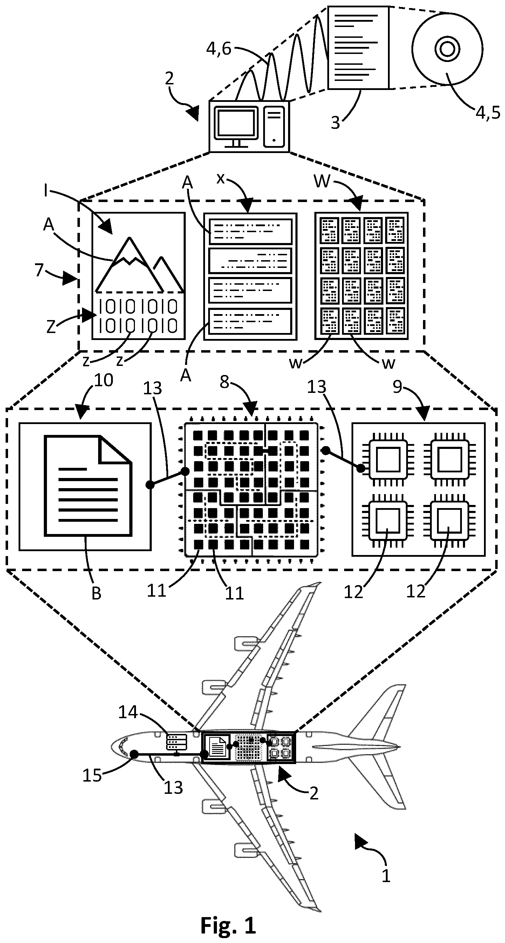

Fig. 1 shows a schematic representation of an apparatus 1, in the form of an aircraft, comprising a computing device 2. A computer program 3 can be stored on a computer-readable data carrier 4 which may take the form of a computer-readable medium 5 and/or data carrier signal 6. The computing device 2 comprises an input interface unit 7, a processing module 8 a memory module 9 and an output interface unit 10. The processing module 8 can carry multiple processing units 11 with logical cells which can be provided with respective memory units (not shown). Local data paths of the processing module 8 provide communication links, connecting the processing units to each other. The memory module 9 comprises multiple memory areas 12. The input interface unit 7, processing module 8, memory module 9, and/or the output interface unit 10 can be connected to each other by means of data connections 13 for exchanging data, such as computing values, between the processing units 11 and the memory areas 12.

The apparatus 1 can be provided with a control device 14 that can be connected to at least one control element 15 and/or the computing device 2 via the data connections 13. The computing device 2 may comprise the control device 14 or vice versa. Hence, the control device 14 may comprise the computing device 1, the computer program 3, the computer-readable data carrier 4, and/or the control element 15 as well as any kind of the data connections 13 for exchanging data between the respective above-mentioned components. The control element 15 may be any kind of data source, such as a measuring element, sensor, output device and/or actuator of the apparatus 1, which may constitute a control system or at least a part thereof for controlling a certain function of the apparatus 1. The computing device 2 can receive input values A, for example, in the form of an image I, from the control element 15 via the input interface unit 7 and can compute output values B based on the input data A and provide that output data via the output interface unit 10. The apparatus 1 may thus be at least in part be controlled by means of the computing device 2, in particular by the processing module 8, based on the input values A and/or the output values B.

In the present example, which is highly simplified for illustration purposes, it is explained how the computing device 2 could perform a number of N random projections. For a better understanding of the solution according to the described method, it can be considered that the prior art performs random projections by explicitly executing matrix-vector products R*x, which effectively performs dot products between the N row-vectors of a random matrix R and a feature vector x. In contrast to that, the solution allows a computationally more efficient way to perform N randomly generated projections in terms of the required processing units 11 for carrying out respective numerical operations and the number of memory areas 12 needed to store the information on the particular projections to be performed. In the described method, it is not required to numerically reproduce the same projections defined by the random matrix R according to the prior art. In other words, while the random matrix R can always be used to reproduce the number of N randomly generated projections as described herein, the opposite is not true.

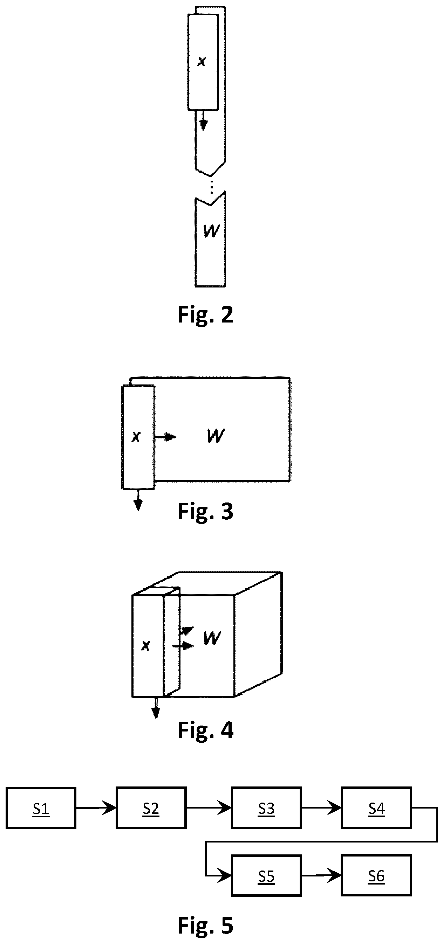

Steps S of the described method (see Fig. 5) are explained by based on two exemplary use cases, namely

- replacing standard dot-products of the random projections by a circular convolution of an input vector x with a projection tensor W, wherein such convolutions can computationally be executed very efficiently in the frequency-domain by making use of the convolution theorem, as illustrated in a schematic representation of a one-dimensional circular convolution between the input vector x with an input number D and the projection tensor W, for example, in the form of a weight vector, with a respective projection number N as shown in Fig. 1; and/or

- in cases where N > D holds, the input vector x and a projection tensor W, e.g., the weight vector, can be embedded (reshaped) into a multidimensional array (tensor) in a computationally advantageous way before applying above-mentioned replacement of standard dot-products of the random projections by a circular convolution, in its multi-dimensional generalization, as illustrated in a symbolic representation of a two- and three-dimensional circular convolution between the input vector x and the projection tensor W as shown in Figs. 2 and 3, respectively.

For illustrational purposes, the method steps S involved in a replacement of standard dot-products of the random projections by a circular convolution are explained by means of a simplistic and unrealistically small numerical example using N = 16 projections on an input tensor x in the form of a D = 4-dimensional feature vector containing respective input values A. For example, the input vector x can be defined as the colon vector as follows:

$$x = [1,0,1,0]'$$

The apostrophe " ' " denotes a transposition operation (in this case to turn a row vector into a column vector). To create N = 16 random projections based on a circular convolution between x and the projection tensor W, for example, a weight vector, can be selected to be a vector of 16 weight values w, e.g., random values. For enhanced readability relatively small exemplary random integer values may be chosen as weight values w as follows:

$$W = [3,4,3,0,1,0,0,2,1,1,3,0,3,2,4,2]$$

To be able to use the convolution theorem (in which the convolution is replaced by element-wise products in the frequency domain), a zero padding Z can be provided to the input values A and/or the feature vector x by adding zeros to define an embedded input tensor X. The first four elements of the embedded input tensor X, as defined in the following, correspond to the feature vector x:

$$X = [1,0,1,0,0,0,0,0,0,0,0,0,0,0,0,0]$$

The convolution can now be performed according to the convolution theorem in the frequency-domain by the following exemplary function:

$$P = real(ifft(fft(W) .* conj(fft(X)))),$$

wherein the operations "fft" and "ifft" denote the fast Fourier transform (FFT) and inverse fast Fourier transform, respectively. The operation "real" extracts the real part of the complex iff-result, and the operation "conj" delivers a complex conjugation which is not necessary but changes the order of the results for easier interpretation). The operation ".*" denotes an element-wise complex multiplication. For the present numerical example, this leads to the following projection result:

$$P = [6,4,4,0,1,2,1,3,4,1,6,2,7,4,7,6],$$

wherein, e.g., the first value "6" of P corresponds to [3, 4, 3, 0] * [1, 0, 1, 0]' = 3*1 + 4*0 + 3*1 + 0*0 = 6, according to the expected convolution (correlation) result between the input vector x and the projection tensor W.

Advantages of such a replacement of standard dot-products of the random projections by a circular convolution become evident when taking into account that respective projections can be done by means of a fixed weight vector as the projection tensor W, so that the Fourier transformation of the projection tensor W can be precomputed. This is not the case for the Fourier transformation of the embedded input vector X, which in the present example has to be performed as a 16-point Fourier transformation for every different given input vector x (even though, in the present example, the actual input vector x has only D = 4 elements).

As we will be described in the following with the help of symbolic representations of a two- and three-dimensional circular convolution between the input vector x and the projection tensor W as shown in Figs. 2 and 3, respectively, embedding (reshaping) the input vector x and the projection tensor W into a multidimensional array can improve efficiency of AI/ML models in that, according to the present example, it merely requires a four-point Fourier transformation to be executed on the original input vector x. Computational efficiency can be particularly enhanced in cases where the projection number N is bigger than the input number D (i.e., N > D), in that the necessity to perform the Fourier transformation on the zero-padded version of the input vector x with a projection number of N elements can be eliminated.

For illustration purposes, the present example again follows above exemplary numeric assumptions, with N = 16, D = 4 which fulfils the requirement of N > D. According to the method as described herein, a Fourier transformed version of two higher dimensional arrays, namely the embedded input tensor X and the projection tensor W can be constructed and used, in which the embedded input tensor X embeds the information of the input feature vector x, and the projection tensor W can embed random values used for projection. Both, the embedded input tensor X and the projection tensor W, possess the same array size, so that their corresponding multi-dimensional Fourier transformations, namely a transformed embedded input tensor X_FD and a transformed embedded projection tensor W_FD, can be used to perform the convolution of the embedded input tensor X and the projection tensor W in the frequency domain.

In a first step S1 (see Fig. 5) the embedding can be defined in determining array sizes used for the embedded input tensor X and the projection tensor W (or equivalently for their transformations X_FD and W_FD, respectively). In the present numerical example, this step is illustrated by an embedding into a 2-dimensional array (matrix) having a number of K1 rows and a number of K2 columns. Given a projection number N of random projections to be performed, and a feature vector x with an input number D, where N > D, the definition of K1 (number of rows) and K2 (number of columns) can be done by according to the following scheme:

- The size K1 is defined by D (which is D = 4 in our example).
- The size K2 is chosen in a way that K1 * K2 >= N, and can be used as a multiplying number O. This corresponds to the requirement that the matrices have at least N elements, which can be ensured by setting K2 to: K2 = ceil(N/D), where the "ceil" operation rounds non-integer results of the N/D division to the next larger integer. In the present numeric example, considering N = 16 and D = 4, this results in K2 = 4, corresponding to the respective multiplying number O.
- The values of K1 and K2 can in general be selected as larger values, e.g., in cases in which this leads to array sizes that can more efficiently be transformed, in particular by FFT (e.g. power-of-two sizes). For instance, for a given D = 3, K1 could be selected as K1 =2^2 = 4.

In the present numerical example, the row count K1 equals the column count K2, such as K1 = K2 = 4 and will therefore define the embedded input tensor X and the projection tensor W (as well as their respective Fourier transformations X_FD and W_FD) as 4x4 matrices.

In a second Step S2, the transformed embedded input tensor W_FD is being pre-computed. According to the exemplary projection number N = 16, values of the respective 4x4 matrix constituting the projection tensor W can again be chosen randomly. For the present numerical example, the following projection tensor W in the form of a two-dimensional matrix can be used:

$$W = \begin{bmatrix} 3 & 1 & 1 & 3 \\ 4 & 0 & 1 & 2 \\ 3 & 0 & 3 & 4 \\ 0 & 2 & 0 & 2 \end{bmatrix}$$

Since the projection tensor W will not or at least does not have to change for different input vectors x, the projection tensor W can be precomputed in the frequency domain, e.g., by computing its higher-dimensional Fourier transformation (in this case a 2-dimensional FFT) as follows:

$$W\_FD = fft(W)$$

In a third step 3, the embedded input tensor X can be constructed from the input feature vector x in the frequency domain as a transformed embedded input vector X_FD. The embedded input tensor X can be constructed, e.g., as a respective matrix, by placing the input vector x into the first column of the embedded input tensor X, while setting the rest of the elements to zero, thus creating a transformed padding matrix Z_FD. Therefore, the input vector x may also need to be zero-padded with zeros 0 to meet the row count K1 in cases where in the first step S1, the row count K1 exceeds the input number D (K1 > D). The embedded input tensor X may take the following exemplary form:

$$X = [x, z, z, z]$$

A respective column vector z with zeros 0 can be defined as z = [0, 0, 0, 0]' of a number of zeros 0 equalling the row count K1. In the present example, for an input vector x = [1, 0, 1, 0] this results in the following embedded input tensor:

$$X = \begin{bmatrix} 1 & 0 & 0 & 0 \\ 0 & 0 & 0 & 0 \\ 1 & 0 & 0 & 0 \\ 0 & 0 & 0 & 0 \end{bmatrix}$$

A corresponding exemplary 2D Fourier transformation of the embedded input tensor X can be computed by the following operation leading to a transformed embedded input tensor X_FD:

$$X\_FD = fft(X)$$

The advantage of embedding the input vector x into a higher-dimensional array is based on fact that the transformed embedded input tensor X_FD does not need to be computed explicitly on the full array (i.e., for the full embedded input tensor X illustrated by a 4x4 matrix according to the present example) as done with the operation X_FD = fft(X). It can instead directly be constructed from the smaller Fourier transformation of the input vector x only, by noting that the following equation holds true for a zero-padded version of the embedded input tensor X_FD:

$$X\_FD = fft(X) = fft[x\ z\ z\ z]) = [x\_FD\ x\_FD\ x\_FD\ x\_FD], \text{ where } x\_FD = fft(x).$$

This identity can be proven using the fact that a two-dimensional Fourier transformation can be expressed by one-dimensional Fourier transformations on each matrix column, followed by one-dimensional transformations on each matrix row. The transformation on each column of the zero-padded embedded input tensor [x z z z] thus results in results in [x_FD z z z], while the subsequent transformation on the $i^{th}$ row of [x_FD z z z] (which is [x_FD(i), 0, 0, 0]) results in [x_FD(i), x_FD(i), x_FD(i), x_FD(i)]. Here, x_FD(i) is defined as the $i^{th}$ element of the column vector x_FD. This principle generalizes to higher dimensions, which allows for obtaining the transformed embedded input tensor X_FD by computing the transformed input vector x_FD as a transformation of the input vector x into the frequency domain.

In this way, explicitly constructing the embedded input vector X or transformed embedded input vector X_FD as matrices can be avoided. Instead, the transformation of the input vector x into the frequency domain can be computed as x_FD = fft(x) with a potentially zero-padded version of the input vector x (padded to match the row count K1 with respective elements if K1 > D). Thus, instead of computing and accessing the transformed embedded input tensor X_FD explicitly, the $i^{th}$ element of the transformed input vector x_FD can be used according to the following operation, thus helping to save up respective memory areas 12 in the memory module 9:

$$X\_FD(i, j) = x\_FD(i) \text{ for the matrix/vector indices } i, j.$$

In a fourth step, S4, the convolution of the projection tensor W and the embedded input tensor X is used in the frequency-domain. For example, a convolution of the projection tensor W and the embedded input tensor X in the frequency-domain can be computed by using the following convolution theorem:

$$P = real(ifft(W\_FD\ .*\ conj(X\_FD)))$$

Here, the transformed projection tensor W_FD can be precomputed according to the second step S2 as well and therefore can be held readily available in respective memory areas 12. To perform the element-wise complex product, again the above-mentioned identity X_FD(i, j) = x_FD(i) according to the third step S3 can be used. In the present numerical example, the projection number N of 16 projections can be computed by this equation as a respective projection result P as follows:

$$P = \begin{bmatrix} 6 & 1 & 4 & 7 \\ 4 & 2 & 1 & 4 \\ 6 & 1 & 4 & 7 \\ 4 & 2 & 1 & 4 \end{bmatrix}$$

It should be noted that respective numbers of the two-dimensional projection result P are not expected to completely correspond to the ones of the one-dimensional projection result P mentioned above.

A method, as described above, enables to significantly enhance computational efficiency and/or model capacity. Therefore, by implementing the described method, a number of operations to be performed by the processing module 8 and/or a memory space occupied in the memory module 9 of computing device 2 and/or the control device 14, and reduce the amount of processing units 11 and/or memory areas 12, respectively, used can be significantly reduced in comparison to the prior art. For comparisons with the prior art, a number of numerical operations (floating point multiplications and additions) needed to perform a projection number N of projections of a given input vector x with an input number D of elements has to be determined or at least estimated. This can be done for a first case in which it is assumed that the projection number N is higher than the input number (N > D) as described further down below, or for a second case that the projection number N is smaller than or equal to the input number D (N <= D), by replacing N by D for the purpose of computing the number of operations and thus deriving respective result from the below results for the first case. It can further be assumed that an embedding (as defined in the first Step S1) using the operations K1 = D and K2 = ceil(N/D) with the row count K1, and the column count K2 being power-of-two values.

For the estimation of the number of operations needed to perform the transformations as mentioned herein, such as Fourier transformations (FFTs), for example, the following equations given in the FFTW documentation can be used (see http://www.fftw.org/speed/method.html):

O_R2C(N) = 5/2 *N * log2(N) for a real to complex FFT (forward FFT), and O_C2C(N) = 5*N * log2(N) for a complex to complex FFT (backward inverse FFT).

These values are valid for power-of-two values of N (The "radix-2" DIT case of the Cooley-Tukey algorithm for FFT). The expressions furthermore hold for higher dimensional FFTs of involved elements according to the respective projection number N as long as the size in each dimension is representable as a power-of-two value. Since first step S1 and the second step S2 do not need to be repeated for a new input feature vector x, only the third step S3 and the fourth step S4 need to be considered, which may constitute a fifths step S5 and sixths step S6, respectively, as follows.

Third step S3 and/or fifth step S5 - compute x_FD = fft(x):

- The x_FD = fft(x) computation which is a D-point real-to-complex FFT requires a number of O_R2C(D) operations.

Fourth Step S4 and/or fifths step S5 - compute ifft(W_FD .* X_FD):

- The N-element wise complex multiplications with each requiring (in the standard form of a complex multiplication) 6 operations per element sum up to 6*N operations.
- The inverse complex-to-complex FFT requires a number of O_C2C(N) operations.

This sums up to the following total number O_INVENT of operations needed according to a method as described herein:

$$O\_INVENT(N,D) = 5/2 *D *log2(D) + N * (6 + 5 * log2(N)$$

In comparison, to perform the matrix-vector product R*x according to the prior art, N*D multiplications and N*(D-1) additions are required, leading to the following number of O_PRIOR operations needed according to the prior art:

$$O\_PRIOR(N,D) = N*D + N*(D-1) = N*(2*D-1)$$

To provide a measure of comparison, an improvement factor O_IMPR(N,D) provided by the described method can be defined as follows:

$$O\_IMPR(N,D) = O\_PRIOR(N,D) / O\_INVENT(N,D)$$

The memory areas 12 required to store the random values used in prior art and this invention can simply be estimated by counting the number of random values stored in a matrix R according to the prior art and the values stored in the transformed projection tensor W_FD as described herein. It should be noted that the transformed projection tensor W_FD stores complex values which each correspond to respective two real values (real and imaginary part). A number of values M_INVENT(N,D) to be stored in the memory module 8 according to a method as described herein and a number of stored values M_PRIOR(N,D) which would have to be stored according to the prior art can be calculated as follows:
M_INVENT(N,D) = 2*max(N,D), which holds for both cases N<=D and N> D, and

$$M\_PRIOR(N,D) = N*D$$

Improvement factors M_IMPR(N,D) with regard to (w.r.t) data storage requirements can therefore be defined as follows:

$$M\_IMPR(N,D) = M\_PRIOR(N,D)/M\_INVENT(N,D) = N/2 \text{ for } N <= D,$$

and

$$M\_IMPR(N,D) = M\_PRIOR(N,D)/M\_INVENT(N,D) = D/2 \text{ for } N > D.$$

The following table provides numerical examples showing a respective number of operations O_PRIOR as the needed according to the prior art in comparison with a respective number of operations O_INVENT as needed according to a method as described herein for carrying out respective steps when processing input values A with different projection numbers N and input numbers D, resulting in a respective improvement factor O_IMPR for operations to be carried out by the processing module 8 and a respective improvement factor M_IMPR for memory space occupied in the memory module 9:

| N | D | O_PRIOR | O_INVENT | O_IMPR | M_IMPR |
|---|---|---|---|---|---|
| 128 | 256 | 65408 | 16896 | 4 | 64 |
| 256 | 256 | 130816 | 16896 | 8 | 128 |
| 1024 | 256 | 523264 | 62464 | 8 | 128 |
| 256 | 512 | 261888 | 37632 | 7 | 128 |
| 512 | 512 | 523776 | 37632 | 14 | 256 |
| 512 | 1024 | 1048064 | 82944 | 13 | 256 |
| 1024 | 1024 | 2096128 | 82944 | 25 | 512 |
| 2048 | 4096 | 16775168 | 393216 | 43 | 1024 |
| 4096 | 4096 | 33550336 | 393216 | 85 | 2048 |
| 4096 | 8192 | 67104768 | 847872 | 79 | 2048 |
| 8192 | 8192 | 134209536 | 847872 | 158 | 2048 |

The definition of the embedding in the first step S1 has generically been described as an embedding into a multidimensional array, while an example has been given for an embedding into a two-dimensional array (matrix), as shown in Fig 3. The embedding into higher dimensional arrays, e.g., three-dimensional, as shown in Fig. 4, can provide additional computational advantages, especially on computationally restricted hardware platforms. If the projection number N of random elements are not distributed into a two-dimensional array of size K1xK2 (with K1*K2 = N) but into a three-dimensional array of size K1xK2xK3 (with K1*K2*K3 = N), the inverse transformation, such as an inverse FFT, performed in the fourth Step S4 can internally be performed by using shorter one-dimensional inverse transformations, e.g., FFTs (along columns, rows and slices). While the number of operations is still given by O_C2C(N), a given hardware platform may provide more efficient FFT implementations for smaller FFT sizes (e.g., due to better internal caching). The construction of the transformed embedded input tensor X_FD in the third step S3 for higher dimensional arrays can be achieved in complete analogy, so that e.g., for a three-dimensional case, the following expression holds (and no extra computational efforts have to be spent):

$$X\_FD(i, j, k) = x\_FD(i)$$

While the computational advantages of this invention are mostly palpable towards AI/ML interference (in which random projections play a substantial role), they also exist for the training phase (e.g., of an ELM), although possibly with a lower overall magnitude.

According to an exemplary embodiment, the above-described method and respective computing device 2 can be used for obstacle classification systems for apparatuses 1 in the form of aircrafts. In such an exemplary embodiment, the images I consisting of respective input values A taken from control elements 15 in the exemplary form of onboard aircraft sensors (cameras) during taxiing or on the runway can be processed by the computing device 2 and/or the control device 14. The computing device 2 and/or the control device 14 can thus be used to derive obstacle class information for further onboard decision making under the constraints of the computationally restricted hardware available on an aircraft (w.r.t floating point performance, memory, power consumption). Obstacle class information derived from the AI/ML system mentored in the computing device 2 can distinguish the respective number of C different classes, e.g., "person", "vessel", "bus", "aircraft", "water puddle", or "light reflection" from each other.

According to respective minimal requirements, such a classification task can be performed using an ELM architecture with the following exemplary characteristics:

- Input sensor images I can be grayscale images with a size of 256x256 pixels,
- corresponding to a D = 256*256 = 65536 feature dimension.
- M different classes can be distinguished from each other.
- The number of random projections can be defined as N = 4*D = 262144.
- The definition of the embedding (according to the first step S1) can lead to K1 = D and K2 = 4, so that K1*K2 = N.
- The transformed rejection tensor W_FD has been precomputed (according to Step 2) by a FFT of a randomly selected W matrix of size K1xK2).
- For the ELM (see below), a random vector b of length N has been defined as a bias vector.
- The classifier can be implemented as a single layer feedforward ELM architecture with a rectified linear unit as an activation function. The ELM model for classification can be expressed as:

$$t(x) = Q * relu(R*x + b),$$

where

- x is the input feature vector of length D (representing the input image),
- t is the output vector of length M, representing the information on the class,
- predicted for the given x by the classifier,
- R is the random projection matrix of size NxD,
- b is a random vector of N elements (the bias vector),
- "relu" is a common rectified linear unit function, and
- Q is a matrix of size MxN that has been trained e.g. by minimising the sum of the squares of the residuals between t and the correct class representations for the training data. The training process will not further be described in detail, since the principles are known for ELMs. However, the computations of the random projections can be replaced by respective computations as described herein.

- The computation of t(x), as given above is done according to the method as described herein by replacing the computation of R*x according to the third step S3 and the fourth step S4 as follows:

    - Obtain the transformed embedded input tensor X_FD from the input vector x (third step S3).
    - Compute the projection result P by using the transformed protection tensor W_FD and the transformed embedded input tensor X_FD (fourth step S4).
    - The projection result P may be flattened (reshaped) into a vector of N elements to be algebraically size-compatible to the result of R*x.

In the above-described exemplary embodiment, the application of an ELM using the prior art, would technically neither be meaningful, nor advisable. Only storing the matrix R (as 32-bit floating point values) alone would require approx. 64GB of memory as a memory size M_PRIOR in the memory module 9 occupying respective memory areas 12. However, by using a method, as described herein, only a memory size M_INVENT of 2MB would be required to store the corresponding transformed projection tensor W_FD in the memory module 9 in a correspondingly reduced number of memory areas 12. At the same time, the number of required operations O_IMPR to be performed in the processing module 8 by respective processing units 11 can be reduced by a factor of 1237 in the present example by implementing a method as described herein.

According to a further exemplary embodiment, the method described herein may be used for anomaly detection in the input values A which can be received through the control element 15 in the apparatus 1, for example in the form of aircraft time series data. In such a further exemplary embodiment, anomalies would have to be detected in time series data of aircraft sensors providing the input values A from the control element 15 which then have to be processed by the computing device 2 and/or the control device 14 as they are provided under the constraints of the computationally restricted onboard hardware (w.r.t floating point performance, memory, power consumption).

According to respective minimal requirements, such a detection task can be performed using an ELM architecture with the following exemplary characteristics for classification:

- From the continuous data stream provided by an aircraft sensor, sections of D consecutive data elements (numbers) should be taken in regular time intervals to build an input feature vector x of length D to be analysed for potential data anomalies (e.g., sensor failures). D is selected to be e.g., D = 256.
- The number of random projections has been defined, e.g., as N = 512*D = 131072.
- The definition of the embedding (according to Step 1) has led to e.g., K1 = D and K2 = 512, so that K1*K2 = N.
- The transformed projection tensor W_FD has been precomputed (according to the second step S2), e.g., by a FFT of a randomly selected projection tensor W in the form of a matrix of size K1xK2.
- For the ELM, a random vector b of length N can be defined as the bias vector.
- The classifier can again be implemented as a single layer feedforward ELM architecture with a rectified linear unit as activation function. This ELM model can be expressed as:

$$t(x) = Q * relu(R*x + b)$$

The difference to the above-described embodiment for classification of image data is that according to the further exemplary embodiment, the matrix Q has been trained as an autoencoder, meaning that t(x) should reconstruct x for training examples of the input vector x known to be free of anomalies.

- During inference, the computation of t(x), as given above is done according to the invention by replacing the computation of R*x by the third step S3 and the fourth step S4 as follows:

    - Obtain the transformed embedded input tensor X_FD from the input vector x (third step S3).
    - Compute the projection result P by using the transformed protection tensor W_FD and the transformed embedded input tensor X_FD (fourth step S4).
    - The projection result P may be flattened (reshaped) into a vector of N elements to be algebraically size-compatible to the result of R*x.

- The actual anomaly detection can be done by computing a reconstruction error (e.g., in the form of the sum of squared differences) between x and its reconstruction t(x).
- As long as the input vector x is free of an anomaly, the reconstruction error is assumed to be low (since the system has been trained to keep this error low for data free of anomalies).
- As soon as the reconstruction error exceeds a defined threshold, this can be defined as an anomaly of the input vector x.

In the above-described further embodiment, the utilisation of the method as described herein can reduce the memory consumption from 128MB to store matrix R according to the prior art to 1MB to store the transformed embedded input tensor W_FD (using 32-bit floating point values). The number of required operations is reduced by a factor of 6 (c.f. O_IMPR).

List of Reference Signs

| | |
|---|---|
| 1 | apparatus / vehicle |
| 2 | computing device |
| 3 | computer program |
| 4 | computer-readable data carrier |
| 5 | computer-readable medium |
| 6 | data carrier signal |
| 7 | input interface unit |
| 8 | processing module |
| 9 | memory module |
| 10 | output interface unit |

| | |
|---|---|
| 11 | processing units |
| 12 | memory area |
| 13 | data connection |
| 14 | control device |
| 15 | control element |

| | |
|---|---|
| A | input value |
| B | output value |
| C | number of different classes |
| D | Dimension of feature vector x |
| I | sensor data / image |
| K1 | Number of rows in W, W_FD, X, and X_FD, if represented as 2D-array (matrix) |
| K2 | Number of columns in W, W_FD, X, and X_FD, if represented as 2D-array (matrix) |
| M INVENT | Number of numerical values needed to store the random values according to the described method |
| M_PRIOR | Number of numerical values needed to store the random values according to prior art |
| M_IMPR | Improvement factor for memory consumption (equals M_PRIOR/M_INVENT) |
| N | Number of random projections to be performed |
| O | Multiplying number |
| O_c2C | Number of numerical operations needed for a complex to complex radix-2 FFT |
| O_IMPR | Improvement factor for number of operations (equals O_PRIOR/O_INVENT) |
| O_INVENT | Number of operations needed according to the method |
| O_PRIOR | Number of operations needed according to the prior art |
| O_R2C | Number of numerical operations needed for a real to complex radix-2 FFT |
| P | Result of a projection |
| R | Random projection matrix of size NxD used in the prior art for the matrix-vector product R*x |
| S | Step |
| S1 | Define embedding |
| S2 | Precompute W_FD |
| S3 | Construct X from the input feature vector x in the frequency domain as X_FD |
| S4 | Perform the convolution of W and X in the frequency-domain |
| S5 | Compute x_FD = fft(x) |
| S6 | Compute ifft(W_FD .* X_FD) |
| w | weight value |
| W | projection/weight tensor or vector / Multidimensional array used to store weight values w and/or random real values |
| W_FD | Multidimensional Fourier transformation of W as complex valued multidimensional array |
| x | Input feature column vector of dimension D containing real values |
| X | Embedded input tensor / multidimensional array used to store the input feature vector x according to the described method |
| x_FD | Fourier transformation of x |
| X_FD | Multidimensional Fourier transformation of X as complex valued multidimensional array |
| z | zero / column vector containing zeros |

**Claims**

1. Method for computing at least one output value (B) from a number of input values (A) by a computing device (2), in particular for performing computer-assisted data classification and/or data regression based on real-time processing of sensor data (I), the method comprising the steps of

   providing an input number (D) representing a vector size of an input vector (x) containing the input values (A);
   defining a projection number (N) of projections as a multiple of the input number (D) based on a respective multiplying number (O);
   precomputing a transformed projection tensor (W_FD) as a transformation of a projection tensor (W) having a projection size of the input number (D) multiplied by the multiplying number (O) and containing weight values (w) in the frequency domain;
   obtaining a transformed embedded input tensor (X_FD) by computing a transformed input vector (x_FD) as a transformation of the input vector (x) in the frequency domain;
   embedding the transformed input vector (x_FD) into the transformed embedded input vector (X_FD); and

using the transformed projection tensor (W_FD) and the transformed embedded input vector (X_FD) for computing the at least one output value (B).

2. Method according to claim 1, wherein the step of obtaining the transformed embedded input vector (W_FD) involves repeating the transformed input vector (x_FD) and/or transformation of the input vector (x) for matching a tensor size of the transformed embedded input tensor (X_FD) and the projection size at least in part.

3. Method according to claim 1 or 2, wherein the projection size is expressed by a row count (K1) and a column count (K2) of the projection tensor (W).

4. Method according to claim 3, wherein the row count (K1) corresponds to the input number (D) and/or the column count (K2) corresponds to the multiplying number (O).

5. Method according to claim 4, further comprising the step of checking whether the input number (D) of the input vector (x) matches the row count (K1).

6. Method according to claim 5, further comprising the step of obtaining the input vector (x) by zero-padding the input vector (x) for cases where the input number (D) is smaller than the row count (K1) such that the length of the zero-padded input vector (x) matches the row count (K1).

7. Method according to at least one of claims 1 to 6, further comprising the step of performing a circular convolution of the transformed projection tensor (W_FD) and the transformed embedded input vector (X_FD) in the frequency domain.

8. Method according to at least one of claims 1 to 7, further comprising the step of storing the transformed input vector (x_FD), and/or the precomputed transformed projection tensor (W_FD) in a respective dedicated memory area (12).

9. Method according to at least one of claims 1 to 8, further comprising the step of obtaining the input vector (x) and/or the input values (A) from reading out sensor data (I) from at least one sensor element and/or at least one data source.

10. Method according to claim 9, wherein the at least one sensor element comprises or is part of a sensor array.

11. Method according to at least one of claims 1 to 10, further comprising the step of attributing the at least one output value (B) to at least one of a number (C) of different classes to be distinguished from each other.

12. A computer program (3) comprising instructions which, when the program is executed by a computing device (2), cause the computing device (2) to carry out a method according to at least one of claims 1 to 11.

13. A computer-readable data-carrier (4) having stored thereon the computer program (3) of claim 12.

14. A computing device (2) configured to carry out a computer program (3) according to claim 12 and/or comprising a computer-readable data-carrier (4) according to claim 13.

15. An apparatus (1), such as a vehicle, in particular an aircraft, comprising a computing device (2) according to claim 14.

**Fig. 1**

**Fig. 2**

**Fig. 3**

**Fig. 4**

**Fig. 5**

Europäisches
Patentamt
European
Patent Office
Office européen
des brevets

## EUROPEAN SEARCH REPORT

**Application Number**

EP 24 16 3833

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN SHENG ET AL: "FFT-based deep learning deployment in embedded systems", 2018 DESIGN, AUTOMATION & TEST IN EUROPE CONFERENCE & EXHIBITION (DATE), [Online] 19 March 2018 (2018-03-19), pages 1045-1050, XP093183768, DOI: 10.23919/DATE.2018.8342166 Retrieved from the Internet: URL:https://ieeexplore.ieee.org/stampPDF/g etPDF.jsp?tp=&arnumber=8342166&ref=aHR0cHM 6Ly9pZWVleHBsb3JlLmllZWUub3JnL2Fic3RyYWN0L 2RvY3VtZW50LzgzNDIxNjY=> [retrieved on 2024-07-09] * the whole document * | 1-15 | INV. G06F16/906 G06N3/0464 G06N3/047 G06N3/048 G06N3/063 G06N3/088 G06N3/09 |

-----

**TECHNICAL FIELDS SEARCHED (IPC)**

G06N
G06F

The present search report has been drawn up for all claims

| Place of search | Date of completion of the search | Examiner |
|---|---|---|
| The Hague | 9 July 2024 | Ntarlagiannis, V |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2620403 A
- US 2024005207 A1
- US 2023419477 A1
- EP 4081453 A1